# EUROPEAN PATENT SPECIFICATION

(11) **EP 1 401 548 B1**
(45) Date of publication and mention of the grant of the patent: **13.10.2004**
(21) Application number: 02778896.7
(22) Date of filing: 30.05.2002
(51) Int. Cl.: B01D 3/00

(54) **DISTILLER FOR LIQUIDS, LIQUIDS DISTILLATION METHOD AND EQUIPMENT FOR TREATING SEWAGE, WHICH EQUIPMENT INCLUDES SAID DISTILLER**
DESTILLATIONSVORRICHTUNG FÜR FLÜSSIGKEITEN, VERFAHREN ZUR DESTILLATION VON FLÜSSIGKEITEN UND DIE DESTILLATIONSVORRICHTUNG ENTHALTENDE AUSRÜSTUNG ZUR BEHANDLUNG VON ABWASSER
DISTILLATEUR POUR LIQUIDES, PROCEDE ET INSTALLATION DE DISTILLATION DE LIQUIDES DESTINES AU TRAITEMENT D'EAUX D'EGOUTS ET INSTALLATION UTILISANT LEDIT DISTILLATEUR

(30) Priority: 11.06.2001 ES 200101339
(43) Date of publication of application: 31.03.2004
(73) Proprietor: Tecnicas Modulares E Industriales, S.A., 08400 Granollers (ES)
(72) Inventor: PEREZ LAMA, RAMIRO, 08400 Granollers (ES)
(74) Representative: Ponti Sales, Adelaida
(86) International application number: PCT/IB2002/001943
(87) International publication number: WO 2002/100504

(56) References cited:
- EP-A- 0 637 568
- CA-A- 2 186 993
- DE-A- 19 933 715
- US-A- 5 561 987
- US-A- 5 772 850
- RUSSIAN PATENTS ABSTRACTS Week 199312 Derwent Publications Ltd., London, GB; AN 1993-098827(12) XP002224643 & SU 1 725 939 A (CENTRAL ASIA SECT HYDAULIC MACH CONSTR), 15 April 1992 (1992-04-15)

## Description

This invention relates to a distiller for liquids, which includes a heat exchanger with a housing which contains a plurality of tubes, into which is fed the liquid to be treated, means of supplying the liquid to the tubes, means of heating the liquid, means for compressing the steam from evaporation of the liquid, means for feeding the compressed steam into the housing around the tubes and means for removing on the one hand the condensate and on the other the concentrated residue.

The invention also relates to a method for distilling liquids in which this distiller is used, and to equipment for purifying the sewage included in said distiller.

### BACKGROUND OF THE INVENTION

On people-transport equipment which has toilet facilities, such as railways, the sewage generated has to be disposed of.

One possibility is to store the waste in a tank, from which it is removed at intervals for treatment thereof in conventional fixed installations; this system nevertheless requires periodic maintenance and substantial storage space if the tank is not emptied very often.

Some recent systems are based on treatment of the sewage on board the transport equipment itself, though a number of major problems are raised in implementing such solutions.

On the one hand, the sewage has a very high level of contamination, since practically all of it is from toilets which are evacuated by means of vacuum systems with very low consumption of water at each flush (of the order of 0.7 litres per flush); as a result, the conventional treatment systems used at treatment plants and other similar facilities are not useful for this application.

Furthermore, transport equipment has major limitations both in terms of physical space for housing the facilities and supplies of power for consumption.

Finally, it must be borne in mind that solids or liquids with certain levels of contamination cannot simply be disposed of into the environment.

Some systems developed for treatment of the sewage on the means of transport itself consist in biological treatments combined with physical treatments.

Biological treatments have several disadvantages: on the one hand, the bacteria require maintenance, have a limited life and are delicate when subjected to quite simple aggressions, such as bleach, colognes and other similar products which can be poured into the toilet bowl on a railway train; and on the other hand, the solids obtained from the biological treatment and the subsequent physical treatment must be stored for later treatment at an outside plant, for due to their high levels of contamination they cannot simply be expelled onto the track. There is therefore still a need for emptying of tanks and treatment at fixed facilities.

Another disadvantage of this type of systems is that the disinfection treatment following the biological treatment, which is carried out by heating the liquid, involves high energy consumption.

Another method might consist in evaporation by direct heating of the liquid to be distilled, though this again has the disadvantage of high energy consumption.

There also exist facilities for the desalination of water and treatment of industrial waste waters, all such facilities being large and with high energy consumption, using a distillation system in which the latent heat contained in the evaporated steam is recuperated and used to produce boiling in a heat exchanger system, by means of mechanical compression of the steam. In these systems, the water to be treated is recirculated using pumps and is sprayed onto the walls of the tubes of an exchanger, while the previously compressed steam is directed onto the outside of the tubes; by giving up heat to the water through the walls of the tubes, the steam condenses. Spraying of the water is necessary in order to achieve a good thermal exchange coefficient.

Although in some respects this treatment system could be suitable for sewage on transport equipment, the necessarily small dimensions of the overall installation make good operation thereof impossible. For example, the recirculation pumps would suffer phenomena of cavitation due to the low head of water available at the suction indraught point, and the spraying nozzles would become blocked continuously due to their small size and the high quantities of solids in suspension.

CA-A-2186993 disclose a vapour compression distillation apparatus which includes a vessel for containing a liquid to be distilled and a heat exchanger of the shell and tube type immersed in the liquid. The heat exchanger has a top and bottom manifolds and vertical tubes surrounded by a shell.

US-A-5772850 discloses an apparatus for vapour compression distillation, which includes a container having a generally vertical longitudinal centre axis and a bottom and top end caps, a plurality of vertical tubes spacedly disposed within the container, the tube being fixedly held in position by opposing top and bottom tube sheets defining a condensing chamber therebetween.

### DESCRIPTION OF THE INVENTION

The objective of this invention is to resolve the disadvantages mentioned by developing a distiller for liquids and equipment for treating the sewage which, from the point of view of energy expenditure and space occupation, satisfactorily resolves the problems of elimination of sewage on moving equipment, such as railway rolling stock.

In accordance with a first aspect of this invention a distiller is proposed for liquids, characterised in that the liquid-feed means keep the tubes full of liquid up to an intermediate predetermined level, in that said distiller further includes means for inducing turbulence in the liquid which is in the tubes, and in that it comprises a level device with level sensors.

These characteristics permit the problem of treatment of sewage with high contaminant content to be resolved by a process of distillation based on mechanical compression of the steam, while at the same time resolving the problems of energy consumption and large size.

It is important to note that in this description the term "tubes" is used to refer to the ducts containing the liquid to be treated, and must not be interpreted in the literal sense of a duct of round, square or similar section, for the exchanger could also be of the plate type, in which a number of parallel plates form ducts or spaces of long section, inside which the liquid to be treated and the injected steam alternate with each other so that they are kept separate by the plates. In this case, the "tubes" are the spaces between two adjacent plates which contain the liquid to be treated, while the "exterior of the tubes" is formed by the spaces between two adjacent plates into which the steam is injected.

Preferably, the means for setting up turbulence in the liquid include a duct for injecting some of the steam coming from the compressor into the liquid.

The compressed steam causes the liquid to bubble and sets up ascending currents of water in the tubes of the exchanger, thus achieving strong turbulence and good heat exchange.

Also preferably, said duct for injecting some of the steam into the liquid runs in the bottom part of the distiller and consists in a tube with a plurality of lateral steam outlet orifices.

In one embodiment, the distiller also includes a substantially horizontal plate situated inside the housing, above the tubes, with a diameter less than that of the housing.

This plate favours the turbulence by returning to the tubes the liquid which emerges from them owing to the boiling and turbulence.

Advantageously, the distiller also includes a filter of perforated plates, situated above the tubes; in one embodiment, said filter is made up of a horizontal plate with a perforated central zone and at least one perforated annular plate, fixed onto the bottom part of said horizontal plate, around its perforated central zone.

The filter can prevent the bubbles and foam from the liquid reaching the steam outlet.

Preferably, the housing has a lower tank, connected to the tubes and surrounded by means of heating the liquid; said lower tank can have a duct with a valve for extracting the concentrated residues.

This tank permits good decantation of the solids in the bottom part of the distiller.

In one embodiment, said means for compressing the steam consist in a side-channel blower.

Optionally, the distiller includes a condensate outlet calibrated to a predetermined diameter so as to avoid losses of output.

In a suitable constructional embodiment, the housing of the distiller is made of up an intermediate section with the tubes of the heat exchanger, an upper section with a steam outlet and a lower section with an inlet for the liquid to be treated and with a concentrated residue outlet, these three sections being attached to each other by means of detachable fixing means.

This construction method facilitates manufacturing, assembly and disassembly of the distiller.

In accordance with a second aspect of this invention, a liquids distillation method is proposed which includes the following operations: heating the liquid to be treated and delivering it inside the tubes of a heat exchanger; compressing the steam resulting from evaporation of the liquid and bringing it into contact with the exterior wall of the exchanger tubes; and removing the condensate and the concentrated residue, and is characterised in that the tubes of the exchanger are kept full of liquid up to a predetermined level, and turbulence is induced in the liquid in the tubes.

The method has excellent energy efficiency, and is suitable for liquids with high levels of contamination.

In accordance with a preferred embodiment, said turbulence in the liquid is induced by injecting some of the compressed steam into the liquid to make it bubble.

Preferably, the method includes a stage of preheating the liquid to be treated, with recuperation of the heat of the condensate obtained from the steam; this stage improves the energy efficiency of the process.

In accordance with a third aspect, this invention also relates to equipment for treating sewage which includes a distiller of the above-mentioned characteristics.

Thanks to the advantages of the distiller described, equipment of this type is of low consumption and low volume and weight, which makes it particularly suitable for fitting on vehicles, mainly passenger-transport vehicles (such as trains, coaches, etc.) for treating water from toilets, kitchens, showers and other facilities in the vehicles. It is also suitable in transportable modules utilisable as toilets, camping kitchens and others, in which the water has to be treated in order to dispose of it into the environment or reuse it, in situations of scarcity of water and difficulty in obtaining sufficient electrical energy, or even in fixed locations, especially where there are difficulties in water or energy supply.

Preferably, the equipment further includes a heat recuperator for preheating the water to be treated, in which the condensate extracted from the distiller gives up heat to the water to be treated, before the water is supplied to the distiller, in order to improve the energy efficiency of the unit as a whole.

In one embodiment, the equipment includes a residues storage tank divided into two parts by a filtering divider, with one of the parts of the tank connected to an inlet duct for the sewage to be treated and an inlet duct for the concentrate residue from the distiller, while the other part of the tank is connected to a water for sucking up the water to be treated.

Thanks to the treatment of the invention, the tank can be emptied at much longer intervals than in conventional facilities.

In accordance with a preferred embodiment of the equipment of the invention, that latter also includes means for drying the concentrated residues.

Drying of the residues is very advisable, since it greatly reduces the volume of the final residues which have to be stored or expelled, while it further allows the residues to be expelled into the environment because it converts them into non-polluting powder.

Advantageously, said means of drying include a compartment with means of heating and provided with an inlet for the concentrated residues, an outlet for the dry residues, a gases and smoke outlet and a duct for feeding in air.

In one embodiment the equipment also includes means of mechanical separation of the solids contained in suspension in the sewage before they are fed to the distiller.

Optionally, said means of mechanical separation of the solids include a screw conveyor whose housing has a perforated lower part for the outlet of liquid through it.

In one embodiment, 'the equipment includes a catalyst for elimination of ammonia, situated at the outlet from the steam compression means or in a smoke outlet duct.

### BRIEF DESCRIPTION OF THE DRAWINGS

For a better understanding of all that has been set out, some drawings are attached which show schematically and solely by way of non-restrictive example a practical case of embodiment.

In said drawings:
Figure 1 is a schematic diagram showing an embodiment of the distiller of the invention, installed in equipment for treating sewage;
Figure 2 is a cross-section of the distiller of Figure 1;
Figure 3 is a schematic diagram of equipment for treating sewage, with a heat recuperator for preheating of the liquid to be treated;
Figure 4 is schematic diagram of equipment similar to that of Figure 3, with a storage tank; and

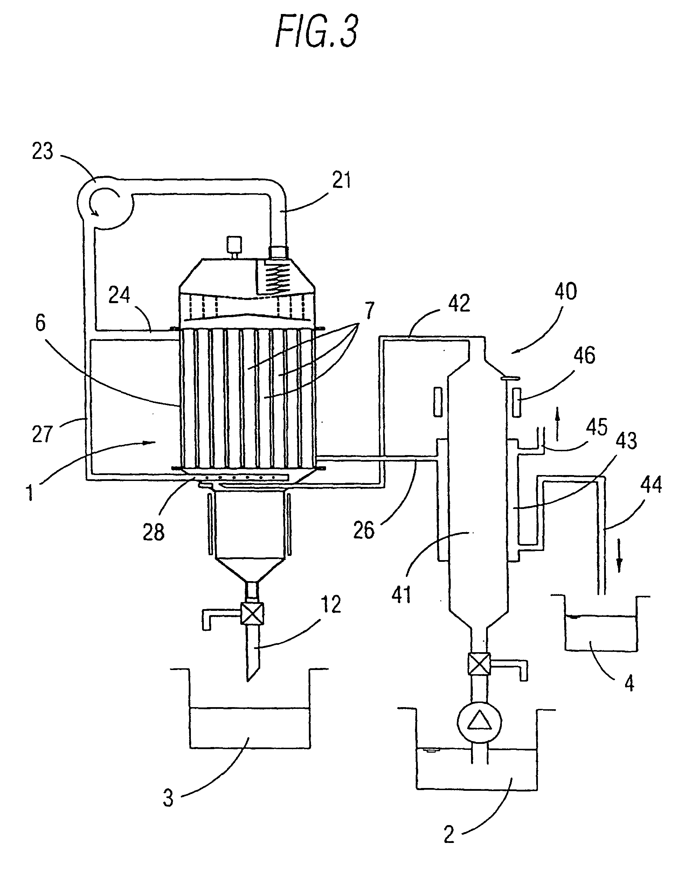

Figure 3 is a schematic diagram of equipment for treating sewage provided with an initial separator of solids and liquids and a device for drying the residue.

### DESCRIPTION OF PREFERRED EMBODIMENTS

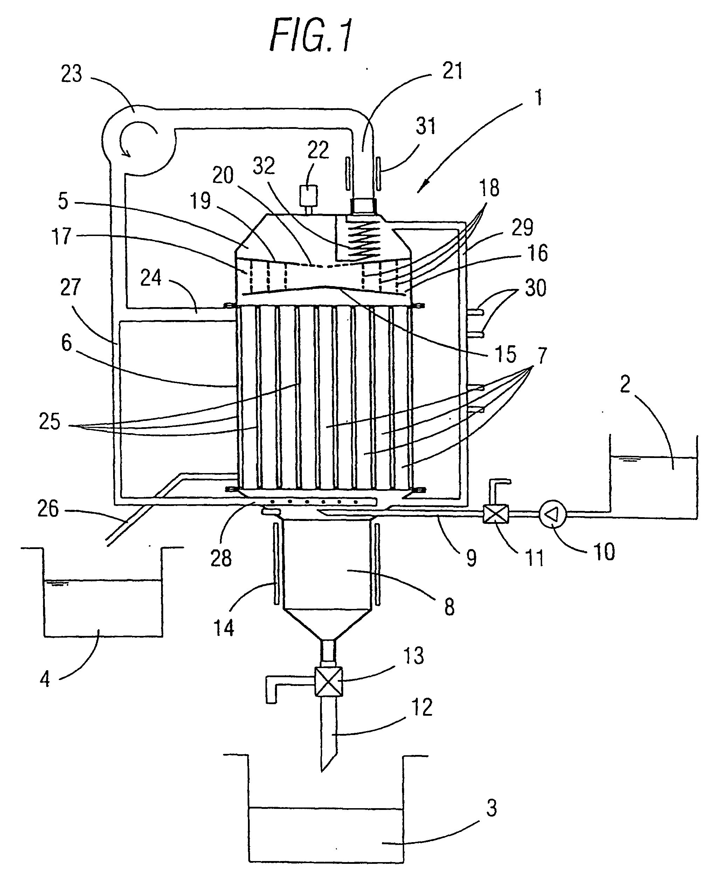

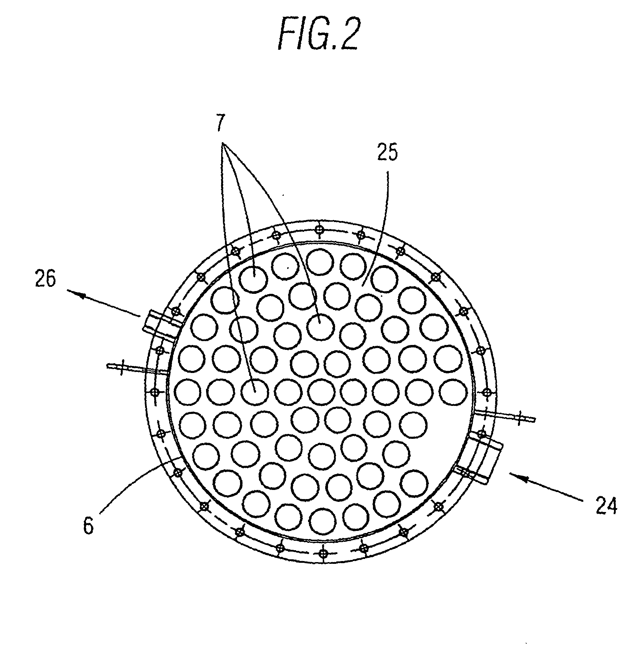

Figures 1 and 2 show a first embodiment of a piece of equipment for the treatment of sewage, the main element of which equipment is a distiller 1 in accordance with the invention.

The equipment includes a tank 2 for sewage to be treated, for example the sewage tank of the toilet of a railway carriage; a tank 3 of concentrated residues, and a tank 4 of clean water as the product of distillation.

Throughout the description which follows reference is made to treatment equipment applied to railways, although it is clear that the same equipment, with or without modifications, is applicable to many other different uses.

The distiller 1 is made up of a housing formed by three sections: a cover or upper section 5, an exchanger 6 provided with vertical tubes 7 open at both ends, and a cover or lower section 8.

The tubes 7 could also be inclined, if for example the distiller must be placed in a location of low height.

The lower section 8 includes inlet tubing 9 for water from the tank 2 to be treated, with a corresponding supply pump 10 and a valve 11, and forms a space for decantation of the solid or concentrated residue, which is emptied through a residue outlet 12 provided with a valve 13. The tapered shape of the lower section 8 facilitates the concentration of residues for emptying thereof.

The tube 9 could be mounted vertically, traversing the heat exchanger and coming out at the same zone; in this case, there would be an effect of preheating of the water to be treated.

An annular heating element 14 is mounted around a cylindrical part of the lower section 8.

The pump 10 supplies the water to be treated from the tank 2 to the distiller, filling the tubes 7 of the exchanger and maintaining a certain level of water in them; in the lower section 8 the water is heated up to around 100°C, such that the entire mass of water in the lower part 8 and in the tubes 7 is boiling. As the water in the tubes 7 evaporates the solid falls down through the tubes and is collected in the lower section 8, whose concentration of solid increases until it is emptied.

The heating of the water up to temperatures close to 100°C, in addition to causing the water to evaporate, promotes flocculation and has the advantage of disinfecting the water by eliminating the bacteria, so that the water is treated and disinfected in a single process.

In the upper section 5 of the distiller 1 is fitted a slightly conical plate 15, of smaller diameter than that of the housing and situated above the tubes 7. Grooves 16 are formed between the plate 15 and the wall of the housing for passage of the steam from evaporation of the water in the tubes 7. The boiling water contained in the tubes 7 strikes against the plate 15 and is returned to the tubes, and only the steam can rise towards the upper part of the distiller.

Above the plate 15 there is a perforated-sheet filter 17 formed by three concentric perforated annular plates 18 and a horizontal plate 19 perforated at its central part 20. This filter can serve to break the foam and the bubbles which form by boiling of the dirty water, preventing them reaching the upper part of the distiller. An alternative solution would be to make the distiller taller; the filter means that the apparatus can be of a smaller size.

At the upper part of the distiller 1 is a steam outlet 21 and a safety valve 22.

The steam outlet 21 feeds the steam to a mechanical compressor 23, which can for example be a side-channel blower, known in other applications. The compressor 23 can have a drainage tube (not shown) towards the distiller 1, so as to remove any condensate which forms in it.

The steam from the compressor 23 is fed through a duct 24 to the heat exchanger 6, in the space 25 outside the tubes 7. Thanks to compression, the enthalpy of the steam increases and it tends to condense, so that in the exchanger 6 the steam gives up heat to the water and condenses. The latent heat of the steam is thus used to induce evaporation of the water, while the condensate, made up of clean water, is collected in the tank 4 through a condensate outlet duct 26. This duct 26 is preferably calibrated to a predetermined diameter in order to prevent outlet of steam and attendant loss of efficiency.

Under normal circumstances exchange of heat between the steam and the water would be small, due to the scant temperature gradient, but in this invention, as explained below, the thermal exchange is improved to the point of achieving a system with low energy consumption.

Some of the steam from the compressor 23 is recirculated toward the water to be treated, via a duct 27, and is made to bubble in the lower section 8 of the distiller through a perforated diffuser tube 28. The introduction of pressurised steam into the water to be treated through the orifices in the tube 28 sets up turbulence in the water, in the form of a violent bubbling, both in the lower section 8 of the distiller and in the tubes 7; this turbulence spectacularly increases the coefficient of heat exchange between the water and the steam, and as a result notable increases the energy efficiency of the distiller.

Figure 1 also shows a level device 29 with level sensors 30, associated with the distiller 1 in order to monitor its operation.

Provision has also been made for the fitting of a heating element 31 around the tube 21 in order to provide better drying of the steam fed to the compressor 23; instead of an exterior element, however, an element 32 could be fitted for the same purpose inside the housing. Both elements have been shown in Figure 1.

There follows a description of the distillation method in accordance with the invention, according to a basic embodiment, which will be understood easily following the description of the distiller.

The liquid to be treated is heated and fed to the interior of the tubes 7, maintaining a certain level inside them; the steam from boiling of the liquid is compressed, and the compressed steam is supplied partly to the heat exchanger so that it gives up heat to the liquid and condenses and partly directly to the liquid in order to set up turbulence therein.

On the one hand the condensate is obtained, which is clean water, and on the other hand the concentrated residue deposited by decantation is removed. The distilled water obtained can be reutilised or disposed of into the environment; as will be seen below, the residue can be stored and withdrawn at certain intervals, or it can be dried or burned and expelled into the environment.

The approximate energy-consumption figures involved in a conventional process and in the process described are, by way of example, the following: in a conventional process, 80 kcal/kg would be needed to heat the water from 20°C to 100°C, and a further 538 kcal/kg to evaporate the water at 1 bar pressure, making a total of 618 kcal/kg. In the process described, by means of steam compression, the same 80 kcal/kg are required to heat the water, but only 20 kcal/kg to evaporate it, making a total of some 100 kcal/kg. As can be seen, the invention permits energy consumption to be reduced to one-sixth.

On the basis of the basic embodiment of the equipment and the method described additional elements can be added which improve or complement the distiller; there follows a description of equipment fitted with additional elements, although this description is not exhaustive and other elements could be added, or those described combined, depending on the specific requirements of each case.

In all the drawings, for the purposes of greater clarity, any single part has always been marked with the same reference number.

Figure 3 shows sewage treatment equipment which, in addition to the distiller 1, has a heat recuperator 40.

The water to be treated is fed from the tank 2 to the lower part of an inner cylindrical chamber 41 of the heat recuperator 40; it ascends through that chamber and emerges through the upper part, from which a tube 42 takes it to the inlet 9 of the distiller 1.

Around the chamber 41 the heat recuperator 40 has an annular chamber 43 which receives through its upper part the distilled water from the condensate outlet 26 from the distiller. The distilled water emerges through the lower part of the annular chamber and is taken to the clean water tank 4 through a tube 44 which forms a trap; the air and other gases emerge to the exterior through a duct 45 (marked with an arrow).

The residual heat of the clean water obtained in the distiller is thus used to preheat the water to be treated, thereby improving the energy efficiency of the equipment.

An annular heating element 46 can be fitted in the upper part of the heat recuperator 40 in order to heat the water up to a temperature suitable for the distiller 1. That element 46 can replace the element 14 in the distiller or can constitute an additional heating element.

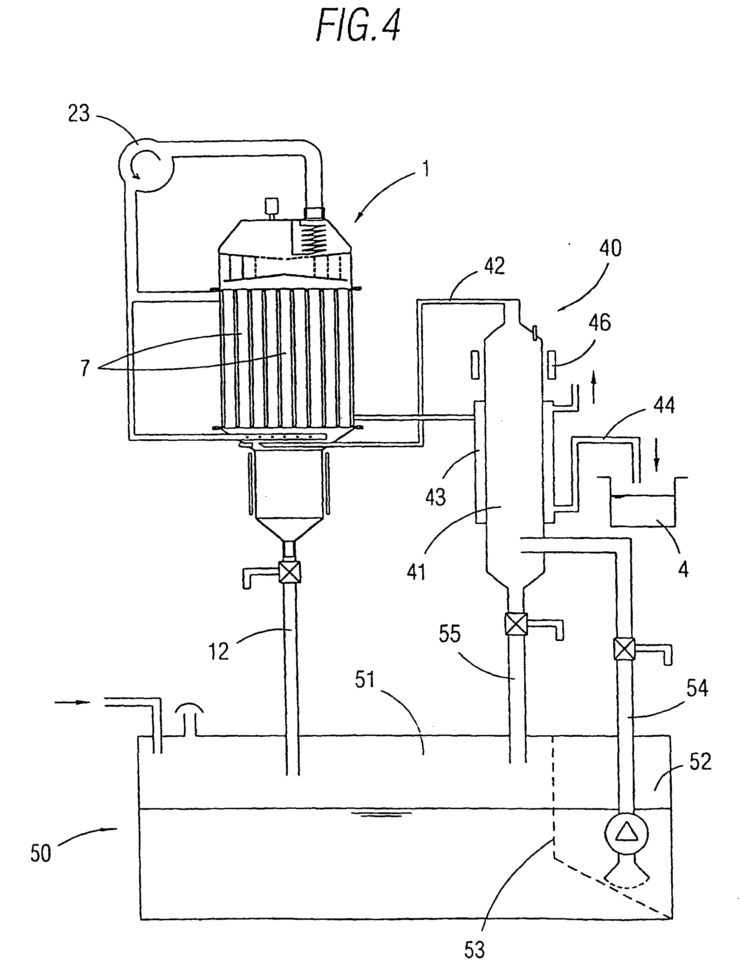

Figure 4 shows a modified embodiment of the equipment shown in Figure 3; in this case the equipment includes a storage tank 50 into which is poured, on the one hand, the contaminated water to be treated from toilets and the like and, on the other hand, the concentrated residue coming from the distiller 1.

The tank 50 is divided into two compartments 51 and 52 by a mesh dividing wall 53; into compartment 51 are poured the concentrated residues and the water to be treated, and from compartment 52 the water to be treated is sucked towards the heat recuperator 40 (or, in an embodiment without recuperator, directly towards the distiller 1).

In this case, as Figure 4 shows, the heat recuperator 40 can also be used to fulfil a decantation function, for which purpose the water to be treated is fed to the recuperator above the bottom of the latter, through a tube 54, and the bottom of the recuperator is fitted with an outlet tube 55 to take the residue to compartment 51 of the tank 50.

The difference when compared with the preceding embodiments is that here a tank of high capacity (say, 200 litres) is provided, in which the concentration of the solid carries on increasing and so the solid must be emptied at intervals; treatment in accordance with the invention nevertheless permits the emptying interval to be very much longer than with other systems. Equipment of this type could require, for example, emptying every 6 months.

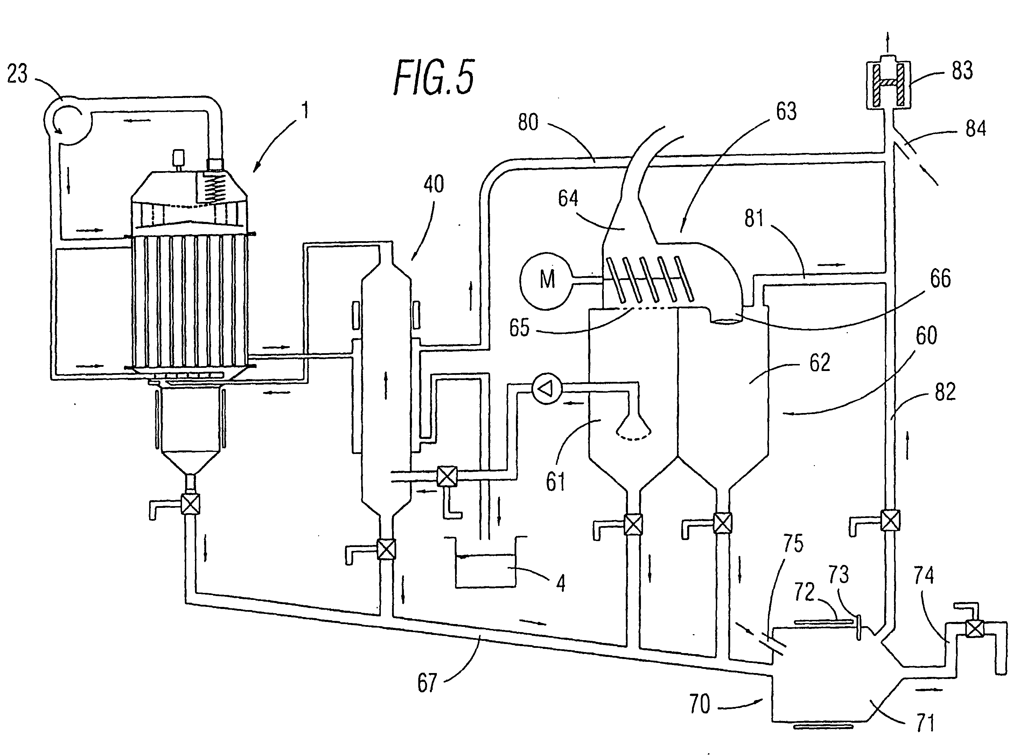

Another, very complete, embodiment of sewage treatment equipment in accordance with the invention is shown in Figure 5.

The equipment of Figure 5 includes a distiller 1, a heat recuperator 40, a separator tank 60 and a drying unit 70.

The separator tank 60 here has two chambers 61 and 62, on which is mounted a conveyor screw 63.

Through an inlet mouth 64, the conveyor 63 receives the sewage to be treated. The bottom 65 of the conveyor which is on the chamber 61 is perforated or with a mesh, in order to let most of the water pass. Most of the solid, on the other hand, is drawn along by the conveyor screw and passed through an outlet mouth 66 to the chamber 62.

The separator tank also acts as a regulator, to which end it is provided with maximum and minimum level sensors (not shown) so that the process can be halted or started up a suitable intervals. This separator tank does not require emptying, as will be seen below, and can have a capacity of up to 25 litres.

The more liquid fraction of the waters to be treated is sucked by a pump from the chamber 61 of the separator tank 60 towards the heat recuperator 40, where it is preheated and then passes on to the distiller 1, as already described. As in the other cases, the distilled water is collected, after it has given up its residual heat in the recuperator 40, in a clean-water tank 4.

In relation to the concentrated residue, provision has been made here for each of the parts (both chambers of the separator tank, the heat recuperator and the distiller) to have outlets for the concentrated residues or solids which they decant; all these outlets, each with its corresponding control valve, emerge into a tube 67 which leads to the drying unit 70.

This unit 70 is made up of a heated compartment 71, in which, by means of an annular heating element 72, the concentrated residues are heated following a predetermined process until they have been totally inertised and dried. A temperature sensor 73 allows the process to be controlled.

An evacuation duct 74 permits the dry solids to be expelled to the exterior, for example by dropping them onto the track in the case of a railway, or stored for subsequent withdrawal. In this respect, it should be borne in mind that the volume of residues once dried is extremely small, and that the drying process turns them into an inert, odourless and non-contaminating powder.

Through an appropriate duct 75 air can be injected into the compartment 71, both in order to facilitate the chemical reactions and to extract the dry residues by blowing at the end of the process.

At various points of the equipment exhaust ducts 80, 81, 82 are provided for the gases generated during the treatment, with all these ducts leading to a single absorbent filter 83, for example of activated charcoal, before the gases are released into the atmosphere. Additionally, the gases can be treated with oxidants, such as ozone, fed in through the duct 84.

Since the residual waters will contain a certain amount of ammonia, a catalyst (not shown) of the type that eliminates ammonia by oxidation or cracking can be fitted. This catalyst can be fitted, together with the filter 83, at the smoke outlet for the equipment as a whole or, for example, at the outlet from the steam compressor 23 to the distiller 1.

In the embodiment of Figure 5 various treatment units have been combined; many variants can clearly be provided, such as equipment with a separator tank constructed like tank 50 in Figure 4, without the conveyor screw 63, or the drying unit could be applied to the equipment of Figures 1 or 3; similarly, the heat recuperator 40 is an optional element which could be omitted in any of the equipment layouts described, while the exhaust gases ducting and treatment could be applied to any of the layouts of the equipment.

Despite the fact that one specific embodiment of this invention has been described and shown, it will be obvious that an expert in the subject could introduce variants and modifications, or replace the details by others that are technically equivalent, without departing from the sphere of protection defined in the attached claims.

For example, although only one exchanger with smooth, round tubes has been described, tubes or ducts of any section can clearly be used, whether smooth, corrugated or the like, and any type of cooling fins can be provided. In the same way, all the conventional variants of heat exchangers can be incorporated into the distiller or heat recuperator, according to the characteristics of each specific case.

All kinds of process-control devices could also be fitted, such as temperature, pressure and level sensors, etc., to ensure the good operation of the distiller and the equipment as a whole.

Some of the possible sensors have been shown in schematic form in the figures, though without reference numbers; similarly, the drawings include some flow and control valves whose description was deemed unnecessary for experts in the subject, who would easily understand their usefulness and operation.

In particular, the valves will permit flow-control for each of the fluids involved in the process, in accordance with readings from suitable temperature and level sensors, etc., so that the equipment operates in an automated manner.

## Claims

1. Distiller (1) for liquids, which includes a heat exchanger (6) with a housing which contains a plurality of tubes (7), into which is fed the liquid to be treated, means (9, 10) of supplying the liquid to the tubes, means (14) of heating the liquid, means (23) for compressing the steam from evaporation of the liquid, means (24) for feeding the compressed steam into the housing around the tubes (7) and means (26, 12) for removing on the one hand the condensate and on the other the concentrated residue, **characterised in that** the liquid-feed means (9, 10) keep the tubes (7) full of liquid up to an intermediate predetermined level, **in that** said distiller (1) further includes means (27, 28) for inducing turbulence in the liquid which is in the tubes (7), and **in that** it comprises a level device (29) with level sensors (30).

2. Distiller as claimed in Claim 1, **characterised in that** the means for inducing turbulence in the liquid include a duct (28) for injecting some of the steam coming from the compressor into the liquid.

3. Distiller as claimed in Claim 2, **characterised in that** said duct (28) for injecting some of the steam into the liquid runs in the bottom part of the distiller (1) and consists in a tube (28) with a plurality of lateral steam outlet orifices.

4. Distiller as claimed in any of Claims 1 to 3, **characterised in that** it also includes a substantially horizontal plate (15) situated inside the housing, above the tubes (7), with a diameter less than that of the housing.

5. Distiller as claimed in any of Claims 1 to 4, **characterised in that** it also includes a filter (17) of perforated plates (18, 19), situated above the tubes (7).

6. Distiller as claimed in Claim 5, **characterised in that** said filter (17) is made up of a horizontal plate (19) with a perforated central zone (20) and at least one perforated annular plate (18), fixed onto the bottom part of said horizontal plate (19), around its perforated central zone (20).

7. Distiller as claimed in any of Claims 1 to 6, **characterised in that** the housing has a lower tank (8), connected to the tubes (7) and surrounded by the means (14) of heating the liquid.

8. Distiller as claimed in Claim 7, **characterised in that** said lower tank (8) has a duct (12) with a valve (13) for extracting the concentrated residues.

9. Distiller as claimed in any of Claims 1 to 8, **characterised in that** said means (23) for compressing the steam consist in a side-channel blower.

10. Distiller as claimed in any of Claims 1 to 9, **characterised in that** it includes a condensate outlet (26) calibrated to a predetermined diameter.

11. Distiller as claimed in any of Claims 1 to 10, **characterised in that** its housing is made of up an intermediate section (6) with the tubes (7) of the heat exchanger, an upper section (5) with a steam outlet (21) and a lower section (8) with an inlet (9) for the liquid to be treated and with a concentrated residue outlet (12), these three sections (5, 6, 8) being attached to each other by means of detachable fixing means.

12. Liquids distillation method which includes the following operations:
- heating the liquid to be treated and delivering it inside the tubes (7) of a heat exchanger (6);
- compressing the steam resulting from evaporation of the liquid and bringing it into contact with the exterior wall of the exchanger (6) tubes (7); and
- removing the condensate and the concentrated residue;
**characterised in that**:
- the liquid inside the tubes (7) of the exchanger (6) is maintained up to certain level; and
- turbulence is induced in the liquid in the tubes (7).

13. Method as claimed in Claim 12, **characterised in that** said turbulence in the liquid is induced by injecting some of the compressed steam into the liquid to make it bubble.

14. Method as claimed in one of Claims 11 to 13, **characterised in that** it includes a stage of preheating the liquid to be treated, with recuperation of the heat of the condensate obtained from the steam.

15. Equipment for treating sewage, **characterised in that** it includes a distiller (1) as claimed in any of Claims 1 to 11.

16. Equipment as claimed in Claim 15, **characterised in that** it further includes a heat recuperator (40) for preheating the water to be treated, in which the condensate extracted from the distiller (1) gives up heat to the water to be treated, before the water is supplied to the distiller (1).

17. Equipment as claimed in either of Claims 15 or 16, **characterised in that** it includes a residues storage tank (50) divided into two parts (51, 52) by a filtering divider (53), with one (51) of the parts of the tank connected to an inlet duct for the sewage to be treated and an inlet duct (12) for the concentrate residue from the distiller (1), while the other part (52) of the tank is connected to a suction duct (54) for water to be treated.

18. Equipment as claimed in any of Claims 15 to 17, **characterised in that** it also includes means for drying (70) the concentrated residues.

19. Equipment as claimed in Claim 18, **characterised in that** said means of drying (70) include a compartment (71) with means of heating (72) and provided with an inlet (67) for the concentrated residues, an outlet (74) for the dry residues, a gases and smoke outlet (82) and a duct (75) for feeding in air.

20. Equipment as claimed in any of Claims 15 to 19, **characterised in that** it also includes means (63) of mechanical separation of the solids contained in suspension in the sewage before they are fed to the distiller.

21. Equipment as claimed in Claim 20, **characterised in that** said means of mechanical separation of the solids include a screw conveyor (63) whose housing has a perforated lower part (65) for the outlet of liquid through it.

22. Equipment as claimed in any of Claims 15 to 21, **characterised in that** it includes a catalyst for elimination of ammonia, situated at the outlet from the steam compression means (23) or in a smoke outlet duct.

## Patentansprüche

1. Destillationsvorrichtung (1) für Flüssigkeiten, mit:
- einem Wärmeaustauscher (6) mit einem Gehäuse, das eine Vielzahl von Rohren (7) aufweist, in welche die zu behandelnde Flüssigkeit geleitet wird,
- einer Einrichtung (9, 10) zur Versorgung der Rohre mit Flüssigkeit,
- einer Einrichtung ( 14) zur Erwärmung der Flüssigkeit,
- einer Einrichtung (23) zur Verdichtung des Dampfes aus der Verdampfung der Flüssigkeit,
- einer Einrichtung (24) zum Einspeisen des verdichteten Dampfes in das Gehäuse um die Rohre (7) herum, und
- einer Einrichtung (26, 12) zur Entfernung einerseits des Kondensats und andererseits der konzentrierten Rückstände,
**dadurch gekennzeichnet, dass** die Einrichtung (9, 10) zur Versorgung mit Flüssigkeit die Rohre (7) auf einem vorher festgelegten Zwischenfüllstand mit Flüssigkeit aufgefüllt hält, und dass die Destillationsvorrichtung (1) weiterhin eine Einrichtung (27, 28) zum Hervorrufen von Durchwirbelungsbewegungen in der in den Rohren (7) befindlichen Flüssigkeit aufweist, und dass sie eine Füllstandseinrichtung (29) mit Füllstandssensoren (30) aufweist.

2. Destillationsvorrichtung nach Anspruch 1, **dadurch gekennzeichnet, dass** die Einrichtung zum Hervorrufen von Durchwirbelungsbewegungen in der Flüssigkeit eine Leitung (28) zum Einblasen von etwas von dem Verdichter kommenden Dampfes in die Flüssigkeit aufweist.

3. Destillationsvorrichtung nach Anspruch 2, **dadurch gekennzeichnet, dass** die Leitung (28) zum Einblasen von etwas Dampf in die Flüssigkeit in dem Bodenabschnitt der Destillationsvorrichtung (1) verläuft und ein Rohr (28) mit einer Vielzahl von seitlichen Dampfauslassöffnungen aufweist.

4. Destillationsvorrichtung nach einem der Ansprüche 1 bis 3, **dadurch gekennzeichnet, dass** sie auch eine innerhalb des Gehäuses über den Rohren (7) angeordnete im Wesentlichen horizontale Platte (15) aufweist, deren Durchmesser geringer ist als der des Gehäuses.

5. Destillationsvorrichtung nach einem der Ansprüche 1 bis 4, **dadurch gekennzeichnet, dass** sie auch einen innerhalb des Gehäuses über den Rohren (7) angeordneten Filter (17) aus perforierten Platten (18, 19) aufweist.

6. Destillationsvorrichtung nach Anspruch 5, **dadurch gekennzeichnet, dass** der Filter (17) aus einer horizontalen Platte (19) mit einem perforierten zentralen Bereich (20) und aus mindestens einer ringförmigen Platte (18) hergestellt ist, welche an dem Bodenabschnitt der horizontalen Platte (19) um ihren perforierten zentralen Bereich (20) herum befestigt ist.

7. Destillationsvorrichtung nach einem der Ansprüche 1 bis 6, **dadurch gekennzeichnet, dass** das Gehäuse einen unteren Behälter (8) aufweist, welcher mit den Rohren (7) verbunden und von der Einrichtung (14) zur Erwärmung der Flüssigkeit umgeben ist.

8. Destillationsvorrichtung nach Anspruch 7, **dadurch gekennzeichnet, dass** der untere Behälter (8) eine Leitung (12) mit einem Ventil (13) zum Absaugen der konzentrierten Rückstände aufweist.

9. Destillationsvorrichtung nach einem der Ansprüche 1 bis 8, **dadurch gekennzeichnet, dass** die Einrichtung (23) zur Verdichtung des Dampfes aus einem Seitenkanalgebläse besteht.

10. Destillationsvorrichtung nach einem der Ansprüche 1 bis 9, **dadurch gekennzeichnet, dass** sie einen Kondensatablass (26) aufweist, welcher auf einen vorher festgelegten Durchmesser kalibriert ist.

11. Destillationsvorrichtung nach einem der Ansprüche 1 bis 10, **dadurch gekennzeichnet, dass** ihr Gehäuse mit einem Zwischenabschnitt (6) mit den Rohren (7) des Wärmeaustauschers, einem oberen Abschnitt (5) mit einem Dampfauslass (21) und einem unteren Abschnitt (8) mit einem Einlass (9) für die zu behandelnde Flüssigkeit und einern Auslass (12) für konzentrierte Rückstände aufgebaut ist, wobei diese drei Abschnitte (5, 6, 8) mittels lösbarer Befestigungseinrichtungen aneinander angebracht sind.

12. Verfahren zum Destillieren von Flüssigkeiten, welches die folgenden Verfahrensschritte aufweist:
- Erwärmen der zu behandelnden Flüssigkeit und Fördern dieser im Inneren der Rohre (7) eines Wärmeaustauschers (6);
- Verdichten des sich aus der Verdampfung der Flüssigkeit ergebenden Dampfes und Inkontaktbringen dieses mit der Außenwand der Rohre (7) des Austauschers (6); und
- Entfernen des Kondensats und des konzentrierten Rückstands;
**dadurch gekennzeichnet, dass**
- die Flüssigkeit innerhalb der Rohre (7) des Austauschers (6) auf einem bestimmten Füllstand gehalten wird; und
- Durchwirbelungsbewegungen in der Flüssigkeit in den Rohren (7) hervorgerufen werden.

13. Verfahren nach Anspruch 12, **dadurch gekennzeichnet, dass** die Durchwirbelungsbewegungen in der Flüssigkeit durch Einblasen von etwas von dem verdichteten Dampf in die Flüssigkeit hervorgerufen werden, um in dieser Blasen zu bilden beziehungsweise in dieser Sprudeln zu bewirken.

14. Verfahren nach Anspruche 12 oder 13, **dadurch gekennzeichnet, dass** es eine Stufe zum Vorerwärmen der zu behandelnden Flüssigkeit mit Rückgewinnung der Wärme des von dem Dampf erhaltenen Kondensats aufweist.

15. Anlage zur Behandlung von Abwasser, **dadurch gekennzeichnet, dass** sie eine Destillationsvorrichtung (1) nach einem der Ansprüche 1 bis 11 aufweist.

16. Anlage nach Anspruch 15, **dadurch gekennzeichnet, dass** sie weiterhin einen Wärmerückgewinnner beziehungsweise Wärmetauscher (40) zur Vorerwärmung des zu behandelnden Wassers aufweist, in welchem das aus der Destillationsvorrichtung (1) abgezogene Kondensat Wärme an das zu behandelnde Wasser abgibt, bevor das Wasser der Destillationsvorrichtung (1) zugeführt wird.

17. Anlage nach Anspruch 15 oder 16, **dadurch gekennzeichnet, dass** sie einen Speicherbehälter (50) für Rückstände aufweist, welcher durch eine filternde Schottenwand (53) in zwei Abschnitte (51, 52) aufgeteilt ist, wobei einer (51) der Abschnitte des Behälters mit einer Einlassleitung für das zu behandelnde Abwasser und mit einer Einlassleitung (12) für den konzentrierten Rückstand von der Destillationsvorrichtung (1) verbunden ist, während der andere Abschnitt (52) des Behälters mit einer Saugleitung (54) für zu behandelndes Wasser verbunden ist.

18. Anlage nach einem der Ansprüche 15 bis 17, **dadurch gekennzeichnet, dass** sie auch eine Einrichtung zur Trocknung (70) der konzentrierten Rückstände aufweist.

19. Anlage nach Anspruch 18, **dadurch gekennzeichnet, dass** die Einrichtung zur Trocknung (70) einen Abschnitt beziehungsweise eine Kammer (71) mit Heizeinrichtung (72) aufweist und mit einem Einlass (67) für die konzentrierten Rückstände, einem Auslass (74) für die trockenen Rückstände, einem Gas- und Rauchauslass (82) und einer Leitung (75) zur Zufuhr von Luft ausgerüstet ist.

20. Anlage nach einem der Ansprüche 15 bis 19, **dadurch gekennzeichnet, dass** sie auch eine Einrichtung (63) zur mechanischen Trennung der in Suspension im Abwasser enthaltenen festen Bestandteile vor der Zufuhr zur Destillationsvorrichtung aufweist.

21. Anlage nach Anspruch 20, **dadurch gekennzeichnet, dass** die Einrichtung zur mechanischen Trennung von festen Bestandteilen einen Schraubenförderer (63) aufweist, dessen Gehäuse mit einem perforierten unteren Abschnitt (65) zum Auslass von Flüssigkeit durch diesen versehen ist.

22. Anlage nach einem der Ansprüche 15 bis 21, **dadurch gekennzeichnet, dass** sie einen Katalysator zur Eliminierung von Ammoniak aufweist, welcher am Auslass der Einrichtung (23) zur Verdichtung von Dampf oder in einer Rauchauslassleitung angeordnet ist.

## Revendications

1. Dispositif de distillation (1) destiné à des liquides, qui comporte un échangeur thermique (6) ayant un boîtier qui contient une pluralité de tubes (7), dans lequel est introduit le liquide devant être traité, des moyens (9, 10) pour alimenter les tubes en liquide, des moyens (14) pour chauffer le liquide, des moyens (23) pour comprimer la vapeur provenant de l'évaporation du liquide, des moyens (24) pour alimenter le boîtier autour des tubes (7) en vapeur comprimée, et des moyens (26, 12) pour d'une part enlever le condensat, et d'autre part le résidu concentré, **caractérisé en ce que** les moyens d'alimentation en liquide (9, 10) maintiennent les tubes (7) pleins de liquide jusqu'à un niveau prédéterminé intermédiaire, **en ce que** ledit dispositif de distillation (1) comporte de plus des moyens (27, 28) pour induire une turbulence dans le liquide qui est dans les tubes (7), et **en ce qu'**il comporte un dispositif de mise à niveau (29) ayant des capteurs de niveau (30).

2. Dispositif de distillation selon la revendication 1, **caractérisé en ce que** les moyens pour induire une turbulence dans le liquide comporte un conduit (28) pour injecter une certaine partie de la vapeur provenant du compresseur dans le liquide.

3. Dispositif de distillation selon la revendication 2, **caractérisé en ce que** ledit conduit (28) pour injecter une certaine partie de la vapeur dans le liquide s'étend dans la partie inférieure du dispositif de distillation (1), et est constitué d'un tube (28) ayant une pluralité d'orifices latéraux de sortie de vapeur.

4. Dispositif de distillation selon l'une quelconque des revendications 1 à 3, **caractérisé en ce qu'**il comporte également une plaque sensiblement horizontale (15) située à l'intérieur du boîtier, au-dessus des tubes (7), ayant un diamètre inférieur à celui du boîtier.

5. Dispositif de distillation selon l'une quelconque des revendications 1 à 4, **caractérisé en ce qu'**il comporte également un filtre (17) constitué de plaques perforées (18, 19), situé au-dessus des tubes (7).

6. Dispositif de distillation selon la revendication 5, **caractérisé en ce que** ledit filtre (17) est constitué d'une plaque horizontale (19) ayant une zone centrale perforée (20), et d'au moins une plaque annulaire perforée (18), fixée sur la partie inférieure de ladite plaque horizontale (19), autour de sa zone centrale perforée (20).

7. Dispositif de distillation selon l'une quelconque des revendications 1 à 6, **caractérisé en ce que** le boîtier a un réservoir inférieur (8), connecté aux tubes (7) et entouré par les moyens (14) pour chauffer le liquide.

8. Dispositif de distillation selon la revendication 7, **caractérisé en ce que** ledit réservoir inférieur (18) a un conduit (12) ayant une soupape (13) pour extraire les résidus concentrés.

9. Dispositif de distillation selon l'une quelconque des revendications 1 à 8, **caractérisé en ce que** lesdits moyens (23) pour comprimer la vapeur sont constitués d'une soufflante à canal latéral.

10. Dispositif de distillation selon l'une quelconque des revendications 1 à 9, **caractérisé en ce qu'**il comporte une sortie de condensat (26) calibrée à un diamètre prédéterminé.

11. Dispositif de distillation selon l'une quelconque des revendications 1 à 10, **caractérisé en ce que** son boîtier est constitué d'un tronçon intermédiaire (6) ayant les tubes (7) de l'échangeur thermique, d'un tronçon supérieur (5) ayant une sortie de vapeur (21) et d'un tronçon inférieur (8) ayant une entrée (9) pour le liquide devant être retraité, et une sortie de résidu concentré (10), ces trois tronçons (5, 6, 8) étant fixés les uns aux autres par l'intermédiaire de moyens de fixation amovibles.

12. Procédé de distillation de liquides, qui comporte les étapes suivantes consistant à :
- chauffer le liquide devant être traité et l'acheminer à l'intérieur des tubes (7) d'un échangeur thermique (6),
- comprimer la vapeur résultant de l'évaporation du liquide et l'amener en contact avec la paroi extérieure des tubes (7) de l'échangeur (6), et
- enlever le condensat et le résidu concentré,
**caractérisé en ce que** :
- le liquide à l'intérieur des tubes (7) de l'échangeur (6) est maintenu à un certain niveau, et
- une turbulence est induite dans le liquide situé dans les tubes (7).

13. Procédé selon la revendication 12, **caractérisé en ce que** ladite turbulences dans le liquide est induite en injectant une partie de la vapeur comprimée dans le liquide pour générer des bulles.

14. Procédé selon l'une quelconque des revendications 11 à 13, **caractérisé en ce qu'**il comporte une étape de préchauffage du liquide devant être traité, avec récupération de la chaleur du condensat obtenu à partir de la vapeur.

15. Equipement pour traiter des eaux usées, **caractérisé en ce qu'**il comporte un dispositif de distillation (1) selon l'une quelconque des revendications 1 à 11.

16. Equipement selon la revendication 15, **caractérisé en ce qu'**il comporte en outre un récupérateur de chaleur (40) pour préchauffer l'eau devant être traitée, dans lequel le condensat extrait du dispositif de distillation (11) donne de la chaleur à l'eau devant être traitée, avant que l'eau ne soit acheminée vers le dispositif de distillation (1).

17. Equipement selon la revendication 15 ou 16, **caractérisé en ce qu'**il comporte un réservoir de stockage de résidus (50) divisé en deux parties (51, 52) par un élément de division filtrant (53), une première (51) des parties du réservoir étant connectée à un conduit d'entrée pour les eaux usées devant être traitées et à un conduit d'entrée (12) pour le résidu concentré provenant du dispositif de distillation (1), tandis que l'autre partie (52) du réservoir est connectée à un conduit d'aspiration (54) pour l'eau devant être traitée.

18. Equipement selon l'une quelconque des revendications 15 à 17, **caractérisé en ce qu'**il comporte également des moyens pour sécher (70) les résidus concentrés.

19. Equipement selon la revendication 18, **caractérisé en ce que** lesdits moyens de séchage (70) comportent un compartiment (71) ayant des moyens de chauffage (72), et muni d'une entrée (67) pour des résidus concentrés, d'une sortie (74) pour les résidus secs, d'une sortie de gaz et de fumée (82) et d'un conduit (75) pour l'alimentation en air.

20. Equipement selon l'une quelconque des revendications 15 à 19, **caractérisé en ce qu'**il comporte également des moyens (63) de séparation mécanique des matières solides contenues dans la suspension dans les eaux usées avant qu'elles ne soient acheminées vers le dispositif de distillation.

21. Equipement selon la revendication 20, **caractérisé en ce que** lesdits moyens de séparation mécanique desdites matières solides comportent un convoyeur à vis (63) dont le boîtier a une partie inférieure perforée (65) pour la sortie de liquide à travers celle-ci.

22. Equipement selon l'une quelconque des revendications 15 à 21, **caractérisé en ce qu'**il comporte un catalyseur pour élimination d'ammoniac, situé au niveau de la sortie à partir des moyens de compression de vapeur (23) ou dans un conduit de sortie de fumée.
